# EUROPEAN PATENT APPLICATION

(11) **EP 3 751 319 A1**
(43) Date of publication of application: **16.12.2020**
(21) Application number: 19791993.9
(22) Date of filing: 19.04.2019
(51) Int. Cl.: G02B 1/115, B32B 7/023, B32B 15/082, C03C 17/38, C23C 14/06, G02B 1/18

(54) **OPTICAL THIN FILM, OPTICAL MEMBER, AND METHOD FOR MANUFACTURING OPTICAL THIN FILM**

(30) Priority: 27.04.2018 JP 2018086079
(71) Applicant: KONICA MINOLTA, INC., Tokyo 100-7015 (JP)
(72) Inventor: MIZUMACHI, Yasushi, Tokyo 100-7015 (JP); NOSE, Masaaki, Tokyo 100-7015 (JP); HASEGAWA, Kento, Tokyo 100-7015 (JP); AOKI, Yosuke, Tokyo 100-7015 (JP)
(74) Representative: Gille Hrabal
(86) International application number: PCT/JP2019/016790
(87) International publication number: WO 2019/208426

(57) **Abstract**

This optical thin film is provided on a substrate, the optical thin film having a silicon oxide layer containing an oxide of silicon (Si), and a water repellent layer is contains a fluoride and is provided on the silicon oxide layer, the hardness of the silicon oxide layer measured by nanoindentation being 9 GPa or greater, and the arithmetic mean roughness of the water repellent layer measured by AFM being 0.7 nm or greater.

## Description

### Technical Field

The present invention relates to an optical thin film, an optical member, and a method of manufacturing the optical thin film. More particularly, the present invention relate to an optical thin film having good slipping down property, excellent durability required when used as an outdoor lens, and good productivity.

### Background

For example, for driving support of the vehicle, it is performed to mount the vehicle-mounted camera to the vehicle. More specifically, a camera for imaging the rear or side of the vehicle is mounted on the body of the vehicle, to reduce the blind spot by displaying the image captured by the camera in a position visible to the driver, thereby contributing to safe driving. Incidentally, vehicle-mounted cameras are often attached to the outside of the vehicle, water droplets and dirt such as mud often adheres to the lens. Depending on the degree of water droplets or dirt adhered to the lens, the image captured by the camera may become blurred.

Conventionally, there has been provided a water-repellent material having a large contact angle and a surface treatment agent having a surface slipperiness which may be easily wiped off even if stains such as fingerprints adhere (refer to, for example, Patent Document 1). However, even when such a surface treatment agent is used for a lens, the performance of removing water droplets is not satisfactory. Here, in order to improve the water droplet removing performance, the surface roughness of the lens needs to be increased, and the surface roughness may be controlled by lowering the film-forming energies such as lowering the ion beam irradiating intensity or lowering the film-forming rate in the ion assisted deposition (Ion Assisted Deposition) method (hereinafter, simply referred to as "IAD") commonly used in the film-forming of the antireflection layer. However, if the ion beam irradiation intensity is lowered or the film-forming speed is lowered, the film quality of the antireflection layer becomes sparse, and the durability (reliability) required for an outdoor lens such as vehicle application may not be ensured. On the other hand, in order to control the surface roughness of the lens, there are surface treatments such as etching and machining. In this case, however, there is a problem that productivity is greatly reduced due to the additional machining time.

### Prior art Documents

### Patent Documents

Patent Document 1: JP-A 2013-253232

### Summary of the Invention

### Problems to be solved by the Invention

The present invention has been made in view of the above-mentioned problems and situation. An object of the present invention is to provide an optical thin film, an optical member, and a method for manufacturing the optical thin film, which have good slipping down property, are excellent in durability required when used as an outdoor lens, and have good productivity.

### Means to solve the Problems

In order to solve the above-mentioned problems, the present inventors have found the following invention in the process of examining the cause of the above-mentioned problems. It is configured that a water-repellent layer is provided on a silicon oxide layer containing an oxide of silicon (Si), thereby it is possible to provide an optical thin film which is excellent in durability and has good slipping down property because the surface of the silicon oxide layer is hard and the surface of the water-repellent layer is moderately rough. In other words, the above problem according to the present invention is solved by the following procedures.
1. An optical thin film provided on a base material, comprising a silicon oxide layer containing an oxide of silicon (Si), and a water-repellent layer containing a fluoride provided on the silicon oxide layer, wherein the silicon oxide layer has a hardness of 9 GPa or more measured by a nanoindentation method, and the water-repellent layer has an arithmetic average roughness of 0.7 nm or more measured by AFM.
2. The optical thin film according to item 1, further comprising a high refractive index layer under the silicon oxide layer, wherein the high refractive index layer has a higher refractive index than the silicon oxide layer.
3. The optical thin film according to item 2, wherein the high refractive index layer includes an oxide of hafnium (Hf).
4. The optical thin film according to item 2, wherein the high refractive index layer includes an oxide of titanium (Ti) and an oxide of lanthanum (La).
5. The optical thin film according to any one of items 1 to 4, wherein the silicon oxide layer contains an oxide of aluminum (Al).
6. The optical thin film according to any one of items 2 to 4, wherein a second high refractive index layer having a higher refractive index than the base material, and a low refractive index layer having a lower refractive index lower than the second high refractive index layer are provided between the base material and the high refractive index layer in the order from a side of the base material.
7. The optical thin film according to any one of items 2 to 6, wherein the high refractive index layer has a thickness of 10 nm or more.
8. The optical thin film according to any one of items 1 to 5, wherein a slipping down angle of the water-repellent layer at a temperature of 20 °C with a water droplet volume of 7 µL is 20 degrees or less.
9. The optical thin film according to any one of items 1 to 6, wherein a contact angle of the water-repellent layer with respect to water at a temperature of 20 °C is 100 degrees or more.
10. An optical member comprising the base material and the optical thin film according to any one of items 1 to 9 provided on the base material.
11. The optical member according to item 10, being a lens for a vehicle-mounted camera.
12. A method for manufacturing an optical thin film provided on a base material, comprising the steps of:
   forming a silicon oxide layer containing an oxide of silicon (Si) on the base material by a vacuum deposition method; and
   forming a water-repellent layer containing a fluoride on the silicon oxide layer,
   wherein the silicon oxide layer has a hardness of 9 GPa or more measured by a nanoindentation method, and the water-repellent layer has an arithmetic average roughness of 0.7 nm or more measured by AFM.
13. The method for manufacturing an optical thin film according to item 12, further comprising the step of forming a high refractive index layer having a higher refractive index than the silicon oxide layer prior to the step of forming a silicon oxide layer.
14. The method for manufacturing an optical thin film according to item 13, wherein the vacuum deposition method in the step of forming a silicon oxide layer is an ion assisted deposition (IAD) method.
15. The method for manufacturing an optical thin film according to item 14, wherein the vacuum deposition method in the step of forming the high refractive index layer does not use an ion assisted deposition (IAD) method, or the high refractive index layer is formed with a smaller intensity than the ion beam irradiation intensity in the ion assisted deposition (IAD) method in the step of forming a silicon oxide layer.

### Effects of the Invention

According to the above-mentioned means of the present invention, it is possible to provide an optical thin film, an optical member, and a method for manufacturing the optical thin film which have good slipping down property, which are excellent in durability required when used as an outdoor lens, and which have good productivity. The expression mechanism or the action mechanism of the effect of the present invention is not clarified, but is inferred as follows. It is configured that a silicon oxide layer containing an oxide of silicon (Si) and a water-repellent layer containing a fluoride are provided on the silicon oxide layer on a base material, and a hardness of the silicon oxide layer measured by a nanoindentation method is set to be not less than 9 GPa, and an arithmetic average roughness of the water-repellent layer measured by AFM is set to be not less than 0.7 nm, as a result, the water droplets adhering to the surface of the water-repellent layer tend to slip off, and the water droplets may be reliably removed. In addition, the surface roughness of the water-repellent layer, which is the outermost surface, may be set within a specific range by adopting the layer structure as described above without lowering the ion beam irradiation intensity by the IAD method, or without lowering the film-forming rate. As a result, the film quality becomes dense and the durability (reliability) required for outdoor lenses such as vehicle-mounted applications may be secured. Further, as a result of controlling the surface roughness, since the surface processing by such etching or machining is not required, the productivity is also good.

### Brief Description of the Drawings

FIG. is a cross-sectional view of an optical thin film of the present invention.

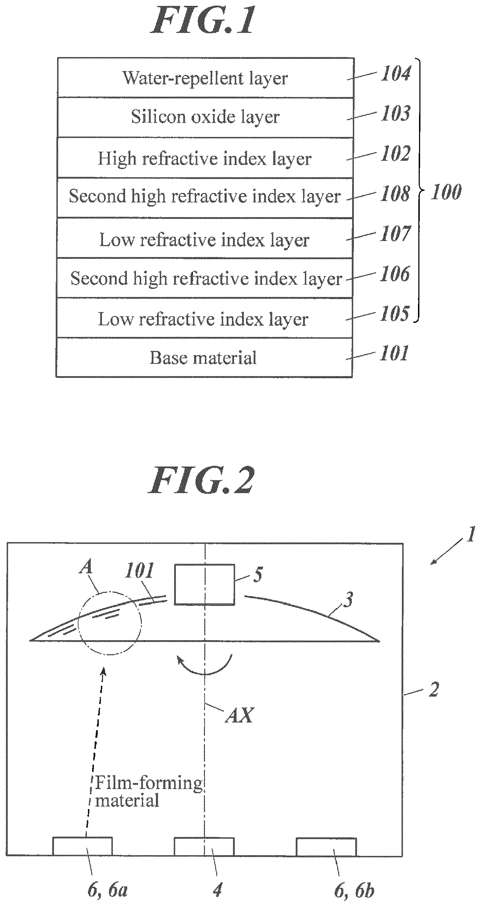

FIG. 2 is a cross-sectional view showing a schematic configuration of a vapor deposition apparatus according to the present invention.

### Embodiments to carry out the Invention

The optical thin film of the present invention is an optical thin film provided on a base material. The optical thin film has a silicon oxide layer containing an oxide of silicon (Si) and a water-repellent layer containing a fluoride on the silicon oxide layer, wherein a hardness of the silicon oxide layer measured by a nanoindentation method is 9GPa or more, and an arithmetic average roughness of the water-repellent layer measured by AFM is 0.7 nm or more. This feature is a technical feature common to or corresponding to each of the following embodiments.

In an embodiment of the present invention, it is preferable that a high refractive index layer having a refractive index higher than that of the silicon oxide layer be provided under the silicon oxide layer in terms of compatibility between the antireflection effect and the slipping down property. It is preferable that the high refractive index layer contains an oxide of hafnium (Hf) in that it is possible to create the above-mentioned surface roughness measured on the water-repellent layer. Further, it is preferable that the high refractive index layer contains an oxide of titanium (Ti) and an oxide of lanthanum (La) in order to produce the above-mentioned surface roughness measured on the water-repellent layer.

It is preferable that the silicon oxide layer contains an oxide of aluminum (Al) from the viewpoint of durability.

It is preferable that a second high refractive index layer having a refractive index higher than that of the base material and a low refractive index layer having a refractive index lower than that of the second high refractive index layer are provided between the base material and the high refractive index layer in the order from a side of the base material in terms of excellent optical performance.

The thickness of the high refractive index layer is preferably 10 nm or more in that the arithmetic average roughness of the water-repellent layer may be set to the above range.

It is preferable that the slipping down angle of the water-repellent layer at a temperature of 20 °C with a water droplet volume of 7 µL is 20 degrees or less, and that the contact angle of the water-repellent layer with respect to water at a temperature of 20 °C is 100 degrees or more in terms of excellent slipping down property and water droplet removal.

The optical thin film of the present invention is preferably used for an optical member, in particular, it is used for a lens of a vehicle-mounted camera, from the viewpoint of preventing water droplets from adhering due to rainy weather and obtaining good visibility.

The method of manufacturing an optical thin film of the present invention is a method of manufacturing an optical thin film provided on a base material. This method contains the steps of: forming a silicon oxide layer containing an oxide of silicon (Si) on the base material by a vacuum deposition method; and forming a water-repellent layer containing a fluoride on the silicon oxide layer, wherein a hardness of the silicon oxide layer measured by a nanoindentation method is 9 GPa or more, and an arithmetic average roughness of the water-repellent layer measured by AFM is 0.7 nm or more. This makes it possible to manufacture an optical thin film having good slipping down property, excellent durability required when used as an outdoor lens, and good productivity.

It is preferable to provide a step of forming a high refractive index layer having a refractive index higher than that of the silicon oxide layer before the step of forming an oxide of silicon layer in order to form an optical thin film having excellent optical performance. Further, it is preferable that the vacuum deposition method in the step of forming an oxide of silicon layer is an ion assisted deposition (IAD) method in that a dense silicon oxide layer may be formed.

It is preferable that the vacuum deposition method in the step of forming the high refractive index layer does not use the ion assisted deposition (IAD) method, or that the high refractive index layer is formed with a smaller intensity than the ion beam irradiation intensity in the ion assisted deposition (IAD) method in the step of forming the silicon oxide layer in order to obtain a surface roughness necessary for excellent water droplet slipping down property.

Hereinafter, the present invention and the constitution elements thereof, as well as configurations and embodiments to carry out the present invention, will be detailed in the following. In the present description, when two figures are used to indicate a range of value before and after "to", these figures are included in the range as a lowest limit value and an upper limit value.

### [Optical thin film]

As shown in FIG. 1, the optical thin film of the present invention is an optical thin film 100 provided on a base material 101. The optical thin film 100 includes a silicon oxide layer 103 containing an oxide of silicon (Si) (hereinafter, also referred to as a silicon oxide), and a water-repellent layer 104 containing a fluoride provided on the silicon oxide layer 103, wherein a hardness of the silicon oxide layer 103 measured by a nanoindentation method is not less than 9 GPa, and an arithmetic average roughness of the water-repellent layer 104 measured by AFM is not less than 0.7 nm. It is preferable that a high refractive index layer 102 having a refractive index higher than that of the silicon oxide layer 103 is provided below the silicon oxide layer 103. In addition, it is preferable that an antireflection layer in which a layer having a high refractive index and a layer having a low refractive index are alternately stacked be provided between the base material 101 and the high refractive index layer 102. Specifically, it is preferable that a second high refractive index layer 106 having a refractive index higher than that of the base material 101 and a low refractive index layer 107 having a refractive index lower than that of the second high refractive index layer 106 are provided in the order from a side of the base material 101.

The surface side (exposed surface side) of the water-repellent layer 104 is a side in contact with air. Each configuration will be described in the following.

### <Configuration of optical thin film>

### (Base material 101)

Examples of the base material include glasses and resins. Examples of the resin include a polycarbonate resin and a cycloolefin resin.

### (High refractive index layer 102)

The high refractive index layer is a layer provided under the silicon oxide layer and having a refractive index higher than that of the silicon oxide layer. It is preferable that the high refractive index layer contains an oxide of hafnium (Hf) or contains an oxide of titanium (Ti) and an oxide of lanthanum (La). When an oxide of hafnium (Hf) is contained, it is preferable in that a surface roughness on a water-repellent layer which becomes superior in slipperiness may be produced, and when an oxide of titanium (Ti) and an oxide of lanthanum (La) are contained, it is also preferable in that a surface roughness on a water-repellent layer which becomes superior in slipperiness may be produced. Examples of hafnium oxides include HfO₂, examples of titanium oxides include TiO₂, and examples of lanthanum oxides include La₂O₃.

The thickness of the high refractive index layer is preferably 10 nm or more in terms of appropriately roughening the surface of the water-repellent layer, more preferably 40 nm or more, and particularly preferably 50 nm or more. The upper limit value is preferably 300 nm or less. The high refractive index layer is preferably formed by a vacuum deposition method described later, and is preferably formed without using an IAD method, which will be described later, or it is preferably formed with a smaller intensity than the ion beam irradiation intensity in the IAD method when the silicon oxide layer is formed.

### (Silicon oxide layer 103)

The silicon oxide layer contains an oxide of silicon (Si). Examples of the silicon oxide include SiO₂. The silicon oxide layer may contain Al₂O₃ in addition to the oxide of silicon. In this case, SiO₂ is preferably contained in the range of 90 to 99% by mass, and Al₂O₃ is preferably contained in the range of 1 to 10% by mass. Since the heat resistance and the scratch resistance are improved as the mixing ratio of Al₂O₃ increases, it is preferably 1% by mass or more, and when it is 10% by mass or less, the film-forming rate is stable and the film appearance is excellent.

The hardness of the silicon oxide layer measured by a nanoindentation method is 9 GPa or more. Preferably, it is 10 GPa or more, and the upper limit value is 13 GPa. The hardness by a nanoindentation method was measured as follows. First, the oxide of silicon layer having a thickness of 100 nm was deposited on a glass plate. As a nanoindentation measuring device, an ultra-small indentation hardness tester ENT-2100 manufactured by Elionix Co., Ltd. was fitted with a triangular pyramid diamond indenter with an interridge angle of 115°, and the diamond indenter was pressed against the film for measurement. The measurement was performed by applying an indenter at a load speed of 0.2 mgf/sec, holding a maximum load of 0.98 mN for 1 second, and then unloading at the same load speed, and the hardness was calculated from the indenter depth obtained from a series of operations and the measured value when the maximum load was reached from the load curve.

The thickness of the silicon oxide layer is preferably 30 nm or more in terms of being able to create a surface roughness on the water-repellent layer, and more preferably 80 nm or more. As an upper limit, it is preferably 300 nm or less. The silicon oxide layer is preferably formed by an IAD method described later.

### (Water-repellent layer 104)

Examples of the water-repellent material contained in the water-repellent layer include a fluoride, and particularly, a fluoride is preferred. Examples of the fluoride include a fluororesin material. A commercially available product is preferably SURFCLEAR100 (SC-100) in a tablet form (Canon Optron, Inc.). In addition, it may be in a liquid form other than the tablet form.

The arithmetic average roughness Ra of the surface of the water-repellent layer is preferably 0.7 nm or more in terms of excellent slipping down property and durability, and more preferably 0.8 nm or more. The upper limit value is preferably 1.3 nm or less in terms of obtaining sufficient optical performance. The arithmetic average roughness is a value measured using AFM (Atomic Force Microscopy) according to JIS B 0601:2001. Specifically, a Dimension Icon (manufactured by Bruker Co., Ltd.) was used, and the measuring area was set to 10 µm x 10 µm.

The thickness of the water-repellent layer is preferably 5 nm or more, and is preferably within a range of 10 to 30 nm in terms of allowing the roughness of the surface of the water-repellent layer to fall within the above specific range and sufficiently ensuring water-repellent performance.

In addition, in the water-repellent layer according to the present invention, it is preferable that a slipping down angle at a temperature of 20 °C with a water droplet volume of 7 µL is 20 degrees or less in terms of slipping down property and is preferable in terms of water droplet removal. The slipping down angle is measured as follows: set the test article (base material with a water-repellent layer) horizontally in a contact angle meter (LSE-B100W: Nick Co., Ltd.); drop 7 µL of water droplet onto the water-repellent layer of the base material placed horizontally; then tilt the base material; and measure the angle of the base material when the water droplet moves by 15 pixels by the aid of an image processing. The temperature at the time of measurement is set to 20 °C and the humidity of 50%.

In addition, in the water-repellent layer according to the present invention, it is preferable that the contact angle to water at a temperature of 20 °C is 100 degrees or more in terms of slipping down property and water droplet removal. The contact angle may be measured by a known method. For example, the measurement is performed in accordance with the method defined in JIS R3257. The measurement condition is set to a temperature of 25 ± 5 °C and a humidity of 50 ± 10%. As a specific operation procedure, about 1.5 µL of water (distilled water) is dropped onto the water-repellent layer, and 5 locations on the water-repellent layer are measured by a solid-liquid interface analyzer (Drop Master 500, manufactured by Kyowa Interface Science Co., Ltd.), and an average contact angle is obtained from an average of the measurement values. The time of the contact angle measurement is set to be 1 minute after water dropping.

The water-repellent layer may be formed using a vacuum deposition method or a coating method, and specifically, a spin coating, a dip coating, or a spray method may be used as a coating method.

### (Antireflection layer)

The antireflection layer has a second high refractive index layer 106 having a refractive index higher than that of the base material 101, and a low refractive index layer 107 having a refractive index lower than that of the second high refractive index layer 106. It is preferable that the antireflection layer has a multilayer structure in which the second high refractive index layer 106 and the low refractive index layer 107 are alternately stacked. It is preferable that the refractive index of the second high refractive index layer 106 with respect to the wavelength of 587.56 nm is in the range of 1.9 to 2.45, and that the refractive index of the low refractive index layer 107 with respect to the wavelength of 587.56 nm is in the range of 1.3 to 1.5.

The material used for the antireflection layer (second high refractive index layer, low refractive index layer) according to the present invention preferably includes a dielectric material. Suitable examples thereof are oxides of Ti, Ta, Nb, Zr, Ce, La, Al, Si, and Hf, and oxidized compounds combining these compounds. By stacking multiple layers of different dielectric materials, it is possible to add a function of reducing the reflectivity of the entire visible range.

Although the number of laminated layers depends on the required optical performance, it is preferable that the reflectivity of the entire visible range be reduced by laminating approximately 3 to 5 layers, and that the upper limit number is 12 layers or less in view of preventing the film from being peeled off due to an increase in the stress of the film.

As a specific configuration of the antireflection layer according to the present invention, as shown in FIG. 1, it is preferable that the low refractive index layer 105, the second high refractive index layer 106, the low refractive index layer 107, and the second high refractive index layer 108 are formed in this order from a side of the base material 101. On the second high refractive index layer 108, it is preferable that the high refractive index layer 102, the silicon oxide layer 103 and the water-repellent layer 104 are provided in this order, but they are not limited to these orders.

The low refractive index layers 105 and 107 are composed of a material having a lower index than the base material 101. Preferable examples of the material are SiO₂, or a mixture of SiO₂ and Al₂O₃.

The low refractive index layers 105 and 107 may be deposited by a known method such as a vacuum deposition method, a sputtering method, or an ion plating method on the base material 101. In particular, it is preferable to form a film by depositing with a vacuum deposition method, without using an IAD method to be described later, or to form a film with a smaller intensity than the ion beam irradiation intensity in the IAD method when forming the silicon oxide layer 103.

It is preferable that the second high refractive index layers 106 and 108 are made of a material having a refractive index higher than that of the base material 101, and these layers are preferably made of a mixture of an oxide of Ta and an oxide of Ti, or otherwise, made of an oxide of Ti, an oxide of Ta, or a mixture of an oxide of La and an oxide of Ti.

The second high refractive index layers 106 and 108 may be deposited by a known method such as a vacuum deposition method, a sputtering method, or an ion plating method on the base material 101. In particular, it is preferable to deposit by a vacuum deposition method, without using the IAD method to be described later, or it is preferable to form a film with a smaller intensity than the ion beam irradiation intensity in the IAD method when depositing the silicon oxide layer 103.

The thickness of the antireflection layer (the total thickness when a plurality of layers are stacked) is preferably in the range of 50 nm to 5 µm. When the thickness is 50 nm or more, it is possible to exhibit the optical properties of antireflection, and when the thickness is 5 µm or less, surface deformation due to layer stress of the antireflection layer itself may be prevented from occurring.

### [Method for manufacturing optical thin film]

A method for manufacturing an optical thin film of the present invention is a method of manufacturing an optical thin film provided on a base material. This method comprises the steps of: forming a silicon oxide layer containing an oxide of silicon (Si) on the base material by a vacuum deposition method; and forming a water-repellent layer containing a fluoride on the silicon oxide layer, wherein a hardness of the silicon oxide layer measured by a nanoindentation method is 9 GPa or more, and an arithmetic average roughness of the water-repellent layer measured by AFM is 0.7 nm or more. Moreover it is preferable to further include a step of forming a high refractive index layer having a refractive index higher than that of the silicon oxide layer before the step of forming the silicon oxide layer.

### <Step of forming high refractive index layer>

In the step of forming a high refractive index layer, a high refractive index layer having a refractive index higher than that of the silicon oxide layer is formed on a base material by a vacuum deposition method. In the vacuum deposition method, it is preferable to form a film without using the IAD method, or to form a film with a smaller intensity than the ion beam irradiation intensity in the IAD method in a step of forming a silicon oxide layer described later. Specifically, it is preferable that the intensity of the current value and ion assist conditions of the ion gun to be described later (acceleration voltage, acceleration current, bias current) are set to be smaller than the value of each condition in the step of forming the silicon oxide layer.

### <Step of forming silicon oxide layer>

In the step of forming the silicon oxide layer, a silicon oxide layer containing an oxide of silicon (Si) is formed on a base material by a vacuum deposition method. In the vacuum deposition method, it is preferable to use an IAD method. Here, an IAD method and a vapor deposition apparatus used in the IAD method will be described.

### (Vapor deposition apparatus)

As shown in FIG. 2, the vapor deposition apparatus 1 according to the present invention includes a chamber 2, a dome 3, an ion gun 4, and a monitor system 5.

At the bottom of the chamber 2, a plurality of evaporation sources 6 are disposed. Here, as the evaporation source 6, 2 evaporation sources 6a and 6b are shown, but the number of evaporation sources 6 may be 1 or 3 or more. A layer (for example, a silicon oxide layer) made of a film-forming material is formed on a base material 101 by heating and evaporating the film-forming material (deposition-forming material) of the evaporation source 6 to adhere the film-forming material to the base material 101 (for example, a glass plate) installed in the chamber 2. As the heating method when evaporating the film-forming material in each evaporation source 6, there are resistance heating, electron beam heating, high-frequency induction heating, or laser beam heating. Any methods may be used. The chamber 2 is provided with a vacuum evacuation system (not shown), by which the interior of the chamber 2 is evacuated.

The dome 3 holds at least one holder (not shown) for holding the base material 101, and is also called a vapor deposition umbrella. The dome 3 has an arc-shaped cross section and has a rotationally symmetrical shape that rotates about an axis AX that passes through the center of the chord connecting both ends of the arc and is perpendicular to the chord. As the dome 3 rotates about the axis AX, for example, at a constant speed, the base material 101 held by the dome 3 via the holder revolves around the axis AX at the constant speed.

The dome 3 may hold a plurality of holders side by side in the rotation radial direction (revolving radial direction) and the rotation direction (revolving direction). This makes it possible to simultaneously form a film on the plurality of base materials 101 held by the plurality of holders, thereby improving the manufacturing efficiency of the optical element.

An ion gun 4 is an apparatus for introducing argon or oxygen gas into the body to ionize these, and irradiating the ionized gas molecules toward the base material 101. By irradiating the base material 101 with the above gas molecules from the ion gun 4, molecules of the film-forming material to be evaporated from the plurality of evaporation sources 6 may be pressed against the base material 101, and a film having high adhesion and denseness may be formed on the base material 101. The ion gun 4 is installed on the axis AX of the dome 3 at the bottom of the chamber 2, but may be installed at a position shifted from the axis AX. When the ion gun 4 is disposed at a position deviated from the axis AX, any of the plurality of evaporation sources 6 may be disposed on the axis AX.

The monitoring system 5 monitors the characteristics of the layers formed on the base material 101 by monitoring the layers that evaporate from the evaporation sources 6 and adhere to the monitoring system 5 during vacuum deposition. By this monitoring system 5, the optical characteristics of the layer to be deposited on the base material 101 are monitored. The optical properties (e.g., transmittance, reflectance, and optical layer thickness) may be grasped. The monitoring system 5 may also include a quartz layer thickness monitor to monitor the physical layer thickness of the layer deposited on the base material 101. The monitoring system 5 also functions as a control unit for controlling switching of ON/OFF of the plurality of evaporation sources 6 in accordance with the monitoring result of the layer.

In the present invention, a silicon oxide layer is formed by depositing a film-forming material constituting a silicon oxide layer on a base material using the above-described vapor deposition apparatus. As the deposition conditions of the silicon oxide layer, it is preferable that the deposition rate is in the range of 2 to 8 Å/sec, for example, the acceleration voltage output of the ion gun is in the range of 700 to 10000 V, the acceleration current is in the range of 700 to 10000 mA, the bias current is in the range of 1400 to 2000 mA, the oxygen introduction amount is 30 to 60 sccm, and the argon introduction amount is in the range of 0 to 10 sccm using an IAD apparatus "NIS-175" manufactured by Synchron Co., Ltd.

### <Step of forming antireflection layer>

In the step of forming the antireflection layer, the low refractive index layer and the second high refractive index layer are formed on the base material by a known method such as a vacuum deposition method, a sputtering method, or an ion plating method. In particular, the low refractive index layer and the second high refractive index layer are preferably formed by a vacuum deposition method, and are preferably formed without using an IAD method, or formed with an intensity lower than the ion beam irradiation intensity in the IAD method when the silicon oxide layer is formed.

### <Step of forming water-repellent layer>

The step of forming the water-repellent layer is preferably formed using a vacuum deposition method or a coating method. Specific examples of the coating method include a spin coating method, a dip coating method, and a spray method. The arithmetic average roughness Ra of the surface of the water-repellent layer obtained by the above step is preferably 0.7 nm or more, from the viewpoint of excellent slipping down property and durability, and more preferably it is 0.8 nm or more.

In addition, in the step of forming the high refractive index layer, the step of forming the antireflection layer, and the step of forming the water-repellent layer, when the film is formed using a vacuum vapor deposition method without using IAD, the film formation may be performed by turning off the drive of the ion gun 4 in the vacuum vapor deposition apparatus 1 used in the step of forming the silicon oxide layer.

### [Optical components for vehicle use or outdoor use]

The optical thin film of the present invention is preferably provided on a base material and used as an optical member. Examples of the optical member include an optical lens for vehicle use or outdoor use, and in particular, it is preferable that the optical member is a lens for a vehicle-mounted camera (a lens constituting a lens unit). The "vehicle-mounted camera" is a camera installed on the outer side of the vehicle body of an automobile, and it is installed on the rear portion of the vehicle body and used for the rear confirmation, or it is installed on the front portion of the vehicle body and used for the front confirmation or the side confirmation, or used for the confirmation of the distance from the front vehicle. Such a lens unit for a vehicle-mounted camera is constituted by a plurality of lenses, in particular, an object-side lens disposed on the object side, and an image-side lens group disposed on the image side. The image-side lens group includes a plurality of lenses and an aperture provided between the lenses. Among such a plurality of lenses, the object-side lens has an exposed surface exposed to the outside air, and the transparent member of the present invention is preferably used as a lens having this exposed surface.

Examples of the optical component for outdoor use include a surveillance camera of an outdoor installed type. Among the lenses forming the surveillance camera, the optical component according to the present invention is preferably used as a lens having an exposed surface exposed to the outside air, and the optical thin film of the present invention is used on the lens.

### Examples

Hereinafter, the present invention will be specifically described with reference to Examples, but the present invention is not limited thereto.

### [Preparation of optical thin film 1]

### <Film formation of high refractive index layer>

Base material: Glass substrate
Evaporation source of film-forming material: Resistance heating method
Film-forming material for high refractive index layer: HfO₂ (manufactured by Merck Co., Ltd)

The above base material was placed in a vacuum deposition apparatus, then the film-forming material was loaded into the first evaporation source. After depressurizing the inside of the apparatus to 1 x 10⁻⁴ Pa, the film-forming material was deposited on the base material at a film deposition rate of 3 Å/sec to obtain a high refractive index layer having a thickness of 50 nm.

### <Film formation of silicon oxide>

Film-forming material of silicon oxide layer: SiO₂ (manufactured by Canon Optron, Inc.)

In the above-mentioned vacuum deposition apparatus, the film-forming material was loaded into the second evaporation source. After depressurizing the inside of the apparatus to 1 x 10⁻⁴ Pa, the film-forming material was evaporated at a deposition rate of 3 Å/sec to form a silicon oxide layer having a thickness of 80nm on the high refractive index layer. Formation of the silicon oxide layer was performed by an IAD method, and it was carried out under the condition of IAD Level 1 shown below. Incidentally, "acceleration voltage", "acceleration current", and "bias current" in Table I indicated below indicate the installation values of the acceleration voltage, acceleration current, and bias current of the device using a device of "NIS-175" manufactured by Synchron Co., Ltd.

**Table I**

| IAD Level No. | Ion Assist Conditions: "NIS-175" made by Synchron Co., Ltd. | | | | |
|---|---|---|---|---|---|
| | Acceleration voltage (V) | Acceleration current (mA) | Bias current (mA) | Oxygen introduction amount (seem) | Argon introduction amount (seem) |
| 0 | 0 | 0 | 0 | 0 | 0 |
| 1 | 1000 | 1000 | 2000 | 50 | 0 |
| 2 | 500 | 500 | 1000 | 50 | 0 |

### <Formation of water-repellent layer>

Film-forming material of the water-repellent layer: SURFCLEAR 100 (SC-100) in a tablet form (manufactured by Canon Optron, Inc.)

In the above-mentioned vacuum deposition apparatus, the above-mentioned film-forming material was loaded into the third evaporation source. After depressurizing the inside of the apparatus to 1 x 10⁻⁴ Pa, the film-forming material was deposited on the silicon oxide layer at a deposition rate of 0.3 Å/sec to form a water-repellent layer having a thickness of 15 nm, thereby obtaining an optical thin film 1 composed of a high refractive index layer, a silicon oxide layer, and a water-repellent layer.

### [Preparation of optical thin films 2 to 10]

In the preparation of the optical thin film 1, the optical thin films 2 to 10 were produced in the same manner except that the film forming material of the high refractive index layer, the thicknesses of the high refractive index layer, the silicon oxide layer, and the water repellent layer, and the IAD Level were changed as indicated in Table II below. In Table II below, OA-600 used as a film-forming material of the high refractive index layer is a commercial product of an oxide of Ta and an oxide of Ti (Ta₂O + TiO₂) (Canon Optron, Inc.).

### [Evaluation]

Each of the optical thin films obtained as described above was evaluated as follows, and the results are indicated in Table II.

### <Hardness>

The hardness of the silicon oxide layer of each optical thin film was measured by a nanoindentation method. The measurement was performed by separately preparing a sample in which a silicon oxide layer was formed on a glass plate, as described above. An ultra-small indentation hardness tester ENT-2100 manufactured by Elionix Co., Ltd. was fitted with a triangular pyramid diamond indenter with an interridge angle of 115°, and the diamond indenter was pressed against the silicon oxide film for measurement. The measurement was performed by applying an indenter at a load speed of 0.2 mgf/sec, holding a maximum load of 0.98 mN for 1 second, and then unloading at the same load speed, and the hardness was calculated from the indenter depth obtained from a series of operations and the measured value when the maximum load was reached from the load curve.

### <Arithmetic average roughness>

The arithmetic average roughness Ra of the surface of the water-repellent layer of the optical thin film was measured by AFM (Atomic Force Microscopy) in accordance with JIS B 0601:2001. Specifically, Dimension Icon (manufactured by Bruker Co.) was used, and the measuring area was set to 10 µm x 10 µm.

### <Contact angle>

The contact angle of the water-repellent layer of the optical thin film with respect to water was measured. The measurement was carried out in accordance with the methods specified in JIS R3257, and the measurement conditions were set to a temperature of 25 ± 5 °C and a humidity of 50 ± 10%. As a specific procedure of operation, about 1.5 µL of distilled water was dropped on a water-repellent layer, and five locations on the water-repellent layer were measured by a solid-liquid interface analyzer (Drop Master 500, manufactured by Kyowa Interface Science Co., Ltd.), and an average contact angle was obtained from an average of the measured values. The time of the contact angle measurement was 1 minute after water dropping.

### <Slipping down property>

A test object (a base material having an optical thin film) was set horizontally on a contact angle meter (LSE-B100W: manufactured by Nick Co., Ltd.), and 7 µL of water droplets was dropped on the water-repellent layer of the base material placed horizontally. Then, by tilting the base material, the angle (slipping down angle) of the base material when the water droplets moved by 15 pixels was measured by the aid of an image processing. The slipping down angle of the test object was evaluated by the following criteria. Here, "AA" and "BB" mean that they have no problem for practical use. The temperature at the time of measurement was 20 °C and the humidity was 50%.

### (Criteria)

AA: Slipping down angle is 10 degrees or less.
BB: Slipping down angle is greater than 10 degrees and equal to or less than 20 degrees
CC: Slipping down angle is greater than 20 degrees

### <Reliability (Durability)>

The surface of the lens of the test object (optical thin film) was rubbed with a scrubbing brush (palm material, Nishio Shoten Co., Ltd.) by applying a weight of 2kg. The conditions for moving the scrubbing brush were as follows. The stroke distance was set to be 5 cm, the number of times was 500 round trips, and the time for one round trip was 1 second. After rubbing, the appearance of the lens was observed with an optical microscope, and the reliability was evaluated according to the following criteria. "AA" means that the test object has no problem for practical use.
AA: No scratches on the exterior are observed in the scratch test
BB: Scratches on the exterior are observed in the scratch test

**Table II**

| Optical thin film No. | High refractive index layer | | | Silicon oxide layer | | | Water-repellent layer | | | Hardness (GPa) | Arithmetic average roughness Ra (nm) | Contact angle (degree) | Slipping down property | Reliability | Remarks |
|---|---|---|---|---|---|---|---|---|---|---|---|---|---|---|---|
| | Film-forming material | Thickness (nm) | IAD Level | Film-forming material | Thickness (nm) | IAD Level | Film-forming material | Thickness (nm) | IAD Level | | | | | | |
| 1 | Hf0₂ | 50 | 0 | Si0₂ | 80 | 1 | SC-100 | 15 | 0 | 11.2 | 0.80 | 10 | AA | AA | Present Invention |
| 2 | Hf0₂ | 50 | 2 | Si0₂ | 80 | 1 | SC-100 | 15 | 0 | 12.2 | 0.70 | 13 | BB | AA | Present Invention |
| 3 | Hf0₂ | 10 | 0 | Si0₂ | 80 | 1 | SC-100 | 15 | 0 | 10.43 | 0.72 | 13 | BB | AA | Present Invention |
| 4 | Hf0₂ | 200 | 0 | Si0₂ | 80 | 1 | SC-100 | 15 | 0 | 12.6 | 0.92 | 8 | AA | AA | Present Invention |
| 5 | Ti0₂+La₂0₃ | 50 | 0 | Si0₂ | 80 | 1 | SC-100 | 15 | 0 | 10.5 | 0.72 | 9 | AA | AA | Present Invention |
| 6 | 0A-600 | 50 | 1 | Si0₂ | 80 | 1 | SC-100 | 15 | 0 | 12.7 | 0.22 | 50 | CC | AA | Comparative Example |
| 7 | Hf0₂ | 50 | 1 | Si0₂ | 80 | 1 | SC-100 | 15 | 0 | 11.3 | 0.42 | 38 | CC | AA | Comparative Example |
| 8 | 0A-600 | 50 | 0 | Si0₂ | 80 | 0 | SC-100 | 15 | 0 | 4. 5 | 0.84 | 7 | AA | BB | Comparative Example |
| 9 | Hf0₂ | 3 | 0 | Si0₂ | 80 | 1 | SC-100 | 15 | 0 | 10.9 | 0.52 | 35 | CC | AA | Comparative Example |
| 10 | Hf0₂ | 50 | 2 | Si0₂ | 80 | 0 | SC-100 | 15 | 0 | 0.42 | 0.84 | 10 | AA | BB | Comparative Example |

As shown in the above result table, the optical thin film of the present invention is superior in slipping down property and reliability (durability) compared with the optical thin film of the comparative example. In the optical thin films 1 to 10, when an antireflection layer containing layers of: SiO₂ (a low refractive index layer), OA-600 (a second high refractive index layer), SiO₂ (a low refractive index layer), and OA-600 (a second high refractive index layer) stacked in the order from a side of the base material is formed between the base material and the high refractive index layer, the optical thin film of the present invention is superior in slipping down property and reliability (durability) compared with the optical thin film of the comparative example.

### Industrial Applicability

The present invention may be applied to an optical thin film, an optical member, and a method for manufacturing an optical thin film which have good slipping down property, which are excellent in durability required when used as an outdoor lens, and which have good productivity.

### Description of Symbols

- 1:: Vapor deposition apparatus
- 2:: Chamber
- 3:: Dome
- 4:: Ion gun
- 5:: Monitoring system
- 6, 6a, 6b:: Evaporating source
- AX: Axis
- 100:: Optical thin film
- 101:: Base material
- 102:: High refractive index layer
- 103:: Silicon oxide layer
- 104:: Water-repellent layer
- 105:: Low refractive index layer
- 106:: Second high refractive index layer
- 107:: Low refractive index layer
- 108:: Second high refractive index layer

## Claims

1. An optical thin film provided on a base material, comprising a silicon oxide layer containing an oxide of silicon (Si), and a water-repellent layer containing a fluoride provided on the silicon oxide layer, wherein the silicon oxide layer has a hardness of 9 GPa or more measured by a nanoindentation method, and the water-repellent layer has an arithmetic average roughness of 0.7 nm or more measured by AFM.

2. The optical thin film described in claim 1, further comprising a high refractive index layer under the silicon oxide layer, wherein the high refractive index layer has a higher refractive index than the silicon oxide layer.

3. The optical thin film described in claim 2, wherein the high refractive index layer includes an oxide of hafnium (Hf).

4. The optical thin film described in claim 2, wherein the high refractive index layer includes an oxide of titanium (Ti) and an oxide of lanthanum (La).

5. The optical thin film described in any one of claims 1 to 4, wherein the silicon oxide layer contains an oxide of aluminum (Al).

6. The optical thin film described in any one of claims 2 to 4, wherein a second high refractive index layer having a higher refractive index than the base material, and a low refractive index layer having a lower refractive index than the second high refractive index layer are provided between the base material and the high refractive index layer in the order from a side of the base material.

7. The optical thin film described in any one of claims 2 to 6, wherein the high refractive index layer has a thickness of 10 nm or more.

8. The optical thin film described in any one of claims 1 to 5, wherein a slipping down angle of the water-repellent layer at a temperature of 20 °C with a water droplet volume of 7 µL is 20 degrees or less.

9. The optical thin film described in any one of claims 1 to 6, wherein a contact angle of the water-repellent layer with respect to water at a temperature of 20 °C is 100 degrees or more.

10. An optical member comprising a base material and the optical thin film described in any one of claims 1 to 9 provided on the base material.

11. The optical member described in claim 10, being a lens for a vehicle-mounted camera.

12. A method for manufacturing an optical thin film provided on a base material, comprising the steps of:
forming a silicon oxide layer containing an oxide of silicon (Si) on the base material by a vacuum deposition method; and
forming a water-repellent layer containing a fluoride on the silicon oxide layer,
wherein the silicon oxide layer has a hardness of 9 GPa or more measured by a nanoindentation method, and the water-repellent layer has an arithmetic average roughness of 0.7 nm or more measured by AFM.

13. The method for manufacturing an optical thin film described in claim 12, further comprising the step of forming a high refractive index layer having a higher refractive index than the silicon oxide layer prior to the step of forming a silicon oxide layer.

14. The method for manufacturing an optical thin film described in claim 13, wherein the vacuum deposition method in the step of forming a silicon oxide layer is an ion assisted deposition (IAD) method.

15. The method for manufacturing an optical thin film described in claim 14, wherein the vacuum deposition method in the step of forming the high refractive index layer does not use an ion assisted deposition (IAD) method, or the high refractive index layer is formed with a smaller intensity than the ion beam irradiation intensity in the ion assisted deposition (IAD) method in the step of forming a silicon oxide layer.
